(19) Europäisches Patentamt
European Patent Office
Office européen des brevets

(11) **EP 4 625 533 A1**

(12) **EUROPEAN PATENT APPLICATION**
published in accordance with Art. 153(4) EPC

(43) Date of publication:
**01.10.2025 Bulletin 2025/40**

(21) Application number: **23937833.4**

(22) Date of filing: **19.05.2023**

(51) International Patent Classification (IPC):
***H01M 4/36*** (2006.01)

(52) Cooperative Patent Classification (CPC):
Y02E 60/10

(86) International application number:
**PCT/CN2023/095338**

(87) International publication number:
**WO 2024/239154 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **ZHANG, Le**
**Ningde, Fujian 352100 (CN)**

• **LIU, Qiang**
**Ningde, Fujian 352100 (CN)**
• **SUN, Yu**
**Ningde, Fujian 352100 (CN)**
• **QIN, Pengcheng**
**Ningde, Fujian 352100 (CN)**
• **LI, Baiqing**
**Ningde, Fujian 352100 (CN)**
• **JIN, Haizu**
**Ningde, Fujian 352100 (CN)**

(74) Representative: **Kraus & Lederer PartGmbB**
**Thomas-Wimmer-Ring 15**
**80539 München (DE)**

(54) **POSITIVE ELECTRODE SHEET, ELECTRODE ASSEMBLY, BATTERY CELL, BATTERY, AND ELECTRIC DEVICE**

(57) The present application relates to a positive electrode plate, a battery, and an electrical apparatus. The positive electrode plate comprises at least two active material layers, wherein two adjacent active material layers respectively comprise a first positive electrode active material and a second positive electrode active material; and under the same test condition, the maximum shrinkage rate of the first positive electrode active material during charging and discharging is T1, the maximum shrinkage rate of the second positive electrode active material during charging and discharging is T2, and T1 and T2 satisfy the following relationship: T1-T2≥0.3%. Compared with a single-layer positive electrode active material layer formed by directly physically mixing the first positive electrode active material and the second positive electrode active material, when T1-T2 of the first positive electrode active material and the second positive electrode active material is ≥ 0.3%, the positive electrode plate is provided to include at least two positive electrode active material layers, which can improve the deterioration of the conductive network of the active materials caused by the asynchronous changes of active materials with different shrinkage rates, thereby improving the dynamic performance of the battery.

FIG. 5

**Description**

## TECHNICAL FIELD

The present application relates to a positive electrode plate, a battery, and an electrical apparatus.

## BACKGROUND

In recent years, with the development of secondary battery technology, secondary batteries are widely used in energy storage power source systems such as water power, thermal power, wind power and solar power stations, as well as power tools, electric bicycles, electric motorcycles, electric vehicles, military equipment, aerospace and other fields. Due to the great development of lithium-ion secondary batteries, higher requirements are raised for their dynamic performance.

## SUMMARY OF THE INVENTION

An object of the present application is to provide a positive electrode plate, a battery, and an electrical apparatus.
In order to improve the performance such as energy density and safety of a battery, different active materials are usually mixed and used, that is, different active materials are mixed into a slurry, which is coated on the surface of a current collector to form a mixed active material layer.
The inventors of the present application have found in experiments that when the active material layer contains different materials with greatly different shrinkage rates, the dynamic performance of the battery is relatively low. However, when the materials with different shrinkage rates are arranged in separate layers, the dynamic performance of the battery is significantly improved.
Embodiments of the present application are realized as follows:
In a first aspect, embodiments of the present application provide a positive electrode plate comprising at least two active material layers;
wherein two adjacent active material layers respectively comprise a first positive electrode active material and a second positive electrode active material; the maximum shrinkage rate of the first positive electrode active material is T1, and the maximum shrinkage rate of the second positive electrode active material is T2; T1 and T2 satisfy the following relationship:

$$T1\text{-}T2 \geq 0.3\%;$$

and

the maximum shrinkage rate refers to the maximum change in the shrinkage or expansion of the unit cell volume of the positive electrode active material during the charge and discharge process.
Compared with a single-layer mixed positive electrode active material layer formed by directly physically mixing the first positive electrode active material and the second positive electrode active material, in the above technical solution, when T1-T2 of the first positive electrode active material and the second positive electrode active material is $\geq 0.3\%$, the positive electrode plate is provided to include at least two positive electrode active material layers, which can improve the deterioration of the conductive network of the active materials caused by the asynchronous changes of active materials with different shrinkage rates, thereby improving the dynamic performance of the battery.
In some optional embodiments, a value range of T1 is 1%-7%.
In some optional embodiments, a value range of T1 is 3%-6.5%.
When T1 is too large, the material shrinks severely, affecting the contact interface between materials and reducing the dynamic performance. Reasonably setting the T1 value range is beneficial to improving the dynamic performance of the battery.
In some optional embodiments, a value range of T2 is 0.3%-5.5%.
In some optional embodiments, a value range of T2 is 0.5%-3%.
Among the currently available positive electrode materials, the smaller maximum shrinkage rate is mainly within this range. When used together with materials with a larger maximum shrinkage rate, the difference in material shrinkage rate is large, and the layered arrangement of the active material layer of the present application is more suitable.
In some optional embodiments, the first positive electrode active material has an average particle diameter Dv50 of 5 $\mu$m-15 $\mu$m.
The first positive electrode active material with the maximum shrinkage rate T1 is selected to have a $D_V50$ of 5 $\mu$m-15 $\mu$m. The larger the particle size, the more pores can be formed during the charge and discharge process, which is beneficial to the electrolyte infiltration and ion conduction.

In some optional embodiments, the second positive electrode active material has an average particle diameter Dv50 of 0.2 $\mu$m-5 $\mu$m.

The second positive electrode active material with the maximum shrinkage rate T2 is selected to have a $D_V$50 of 0.2 $\mu$m-5 $\mu$m, and has a small particle size, which can cooperate with the first positive electrode active material with a larger particle size to further improve the battery charge and discharge cycle effect.

In some optional embodiments, the $D_V$50 value of the first positive electrode active material is greater than or equal to 5 times the $D_V$50 value of the second positive electrode active material.

The $D_V$50 of the first positive electrode active material and the second positive electrode active material is controlled to satisfy the above-mentioned proportional relationship; the high mechanical strength of the active material with a smaller particle size at the same compaction density will alleviate this situation to a certain extent, and the gaps between the large-size particles will not be completely filled, and the ion conduction is better than that of the physical mixed system. The two effects complement each other, thereby effectively improving the battery dynamics.

In some optional embodiments, the $D_V$50 value of the first positive electrode active material is greater than or equal to 5 times the $D_V$50 value of the second positive electrode active material, and less than or equal to 50 times the $D_V$50 value of the second positive electrode active material.

In some optional embodiments, the $D_V$50 value of the first positive electrode active material is greater than or equal to 5 times the $D_V$50 value of the second positive electrode active material, and less than or equal to 35 times the $D_V$50 value of the second positive electrode active material.

By further limiting the particle size ratio of the first positive electrode active material and the second positive electrode active material within the above range, it is helpful to improve the excessive filling of the large particle size active material with the small particle size material when the particle size difference is too large, resulting in insufficient gaps, reduced porosity and worsened ionic impedance.

In some optional embodiments, the $D_V$90-$D_V$10 of the first positive electrode active material is $\leq$20 $\mu$m; and optionally, the particle size distribution of the first positive electrode active material satisfies: 9$\leq D_V$90-$D_V$10$\leq$20 $\mu$m.

By limiting $D_V$90-$D_V$10$\leq$20 $\mu$m in the first positive electrode active material, the particle size of the active material in the first positive electrode active material layer is relatively concentrated.

In some optional embodiments, the $D_V$90 - $D_V$10 of the second positive electrode active material is $\leq$ 9 $\mu$m.

By limiting $D_V$90-$D_V$10$\leq$9 $\mu$m in the second positive electrode active material, the particle size of the active material in the second positive electrode active material layer is relatively concentrated.

In some optional embodiments, any of the positive electrode active material layers comprises a plurality of active materials; and the difference in the maximum shrinkage rate of the plurality of active materials does not exceed 0.3%;

T1 is the minimum value among a plurality of maximum shrinkage rates of the plurality of active materials in the first positive electrode active material; and

T2 is the maximum value among a plurality of maximum shrinkage rates of the plurality of active materials in the second positive electrode active material.

By setting in any of the positive electrode active material layers, the difference in the maximum shrinkage rate of the plurality of active materials during the charge and discharge process does not exceed 0.3%. This combination of active particles with different shrinkage rates that differ by no more than 0.3% is beneficial to improving the impedance and dynamic performance of the battery.

In some optional embodiments, any of the positive electrode active material layers comprises a plurality of active materials; and the difference in the maximum shrinkage rate of the plurality of active materials exceeds 0.3%;

in terms of mass percentage, the plurality of active materials include 85%-100% main active substances; 0-15% trace active substances;

T1 and T2 are both the maximum shrinkage rates of the main active substances.

The same active material layer includes active particles with different shrinkage rates that differ by more than 0.3%. By maintaining the mass proportion of trace active substances between 0-15%, the negative impact of asynchronous shrinkage and expansion can be reduced.

In some optional embodiments, T1-T2>6%, the thickness of the positive electrode active material layer where the first positive electrode active material is located is H1; the thickness of the positive electrode active material layer where the second positive electrode active material is located is H2; and H1:H2 is (7:3)-(1:9).

When T1-T2>6%, when the shrinkage rate difference between the first positive electrode active material and the second positive electrode active material in the two positive electrode active material layers is too large, by setting H1:H2 to (7:3)-(1:9), the expansion of the overall active layer can be limited, the integrity of the electrode structure can be ensured, and the rapid deterioration of dynamics (impedance) caused by changes in the electrode structure during the cycle can be slowed down.

In some optional embodiments, the positive electrode plate includes a positive electrode current collector;

the positive electrode active material layer where the first positive electrode active material is located is close to the current collector; and
the positive electrode active material layer where the second positive electrode active material is located is far away from the current collector.

The first positive electrode active material has a larger particle size and a larger shrinkage rate, and is easy to form more pores during the charge and discharge process, which is beneficial to the transmission of lithium ions. The first positive electrode active material layer is close to the current collector, and the second positive electrode active material has a smaller particle size and a smaller shrinkage rate, and is far away from the current collector. During the charge and discharge cycle, the outer layer can limit the shrinkage and expansion of the inner layer to a certain extent, reduce the deformation of the electrode, reduce the deterioration of the conductive network of the active material, and reduce the impedance growth; at the same time, the shrinkage and expansion of the inner layer with a large shrinkage rate and a large particle size active material can create more pores, accommodate more electrolyte than the initial state, and also achieve the effect of retaining liquid.

In some optional embodiments, a transition layer is formed between the positive electrode active material layer where the first positive electrode active material is located and the positive electrode active material layer where the second positive electrode active material is located.

The particle size of the active material in the first positive electrode active material is relatively large; and the particle size of the active material in the first positive electrode active material is larger than that of the second positive electrode active material. There is a certain difference in particle size between the first positive electrode active material layer and the second positive electrode active material layer, so that a transition layer in which active material particles of different sizes coexist will be formed between the layers, and the bonding effect between the active layers is better, which is beneficial to the improvement of the dynamic performance between the active layers.

In some optional embodiments, the transition layer has a thickness of 0.2 $\mu$m-2 $\mu$m.

An excessively small or large thickness of the transition layer may have a negative impact on the dynamic performance of the battery. If the transition layer is too thick, it may form a structure similar to a mixed layer, affecting the dynamic performance; if the transition layer is too thin, the adhesion between the two layers may be weakened, affecting the dynamic performance.

In some optional embodiments, the second positive electrode active material includes at least one of a spinel structure positive electrode material and an olivine structure positive electrode material.

The second positive electrode active material includes at least one of a spinel structure positive electrode material and an olivine structure positive electrode material, and it is easy to obtain a positive electrode active material layer with a smaller shrinkage rate.

In some optional embodiments, the second positive electrode active material includes $LiMPO_4$, and M includes Mn and non-Mn elements;

optionally, the non-Mn elements include one or both of a first doping element and a second doping element, the first doping element is used for manganese-site doping, and the second doping element is used for phosphorus-site doping;
optionally, the first doping element includes one or more elements of Zn, Al, Na, K, Mg, Mo, W, Ti, V, Zr, Fe, Ni, Co, Ga, Sn, Sb, Nb and Ge;
optionally, the first doping element includes at least two of Fe, Ti, V, Ni, Co, and Mg;
optionally, the second doping element includes one or more elements of B, S, Si and N;
optionally, the second positive electrode active material includes $Li_{1+x}Mn_{1-y}A_yP_{1-z}R_zO_4$, wherein x is any value in the range of -0.100-0.100, y is any value in the range of 0.001-0.500, z is any value in the range of 0.001-0.100, A includes one or more elements of Zn, Al, Na, K, Mg, Mo, W, Ti, V, Zr, Fe, Ni, Co, Ga, Sn, Sb, Nb, and Ge, and R includes one or more elements of B, S, Si, and N;
optionally, the second positive electrode active material includes $Li_aA_eMn_{1-f}B_fP_{1-g}C_gO_{4-n}D_n$,
wherein A includes one or more elements of Zn, Al, Na, K, Mg, Nb, Mo and W;
B includes one or more elements of Ti, V, Zr, Fe, Ni, Mg, Co, Ga, Sn, Sb, Nb, and Ge;
C includes one or more elements of B, S, Si, and N;
D includes one or more elements of S, F, Cl, and Br;
a is selected from the range of 0.9 to 1.1, e is selected from the range of 0.001 to 0.1, f is selected from the range of 0.001 to 0.5, g is selected from the range of 0.001 to 0.1, n is selected from the range of 0.001 to 0.1, and the second positive active material is electrically neutral.

In some optional embodiments, the first positive electrode active material includes a layered structure positive electrode material.

The first positive electrode active material includes a layered structure positive electrode material, and it is easy to obtain a positive electrode active material layer with a large shrinkage rate.

In some optional embodiments, the first positive electrode active material includes at least one of a lithium nickel cobalt manganese oxide ternary material, a lithium nickel cobalt aluminium oxide ternary material, and a lithium nickel cobalt manganese aluminum oxide ternary material, or includes at least one of doped or clad materials of the above ternary materials.

In some optional embodiments, the positive electrode plate includes a current collector; and the at least two active material layers are stacked in sequence on the surface of the current collector, and the porosity of the at least two active material layers decreases in sequence away from the current collector.

By setting the at least two active material layers to be stacked in sequence on the surface of the current collector and the porosity of the at least two active material layers to decrease in sequence away from the current collector, the electrolyte and the positive electrode plate can be fully infiltrated to ensure that the conduction of lithium ions is not affected.

In some optional embodiments, the active material layer in contact with the current collector has a porosity of ≥45%; optionally, the active material layer in contact with the current collector has a porosity of ≥60%.

In the above ratio range, the lithium ion conduction effect is improved.

In some optional embodiments, the outermost active material layer has a porosity of >25%; optionally, the outermost active material layer has a porosity of ≥50%.

In the above ratio range, the lithium ion conduction effect is further improved.

In a second aspect, embodiments of the present application provide a battery including the positive electrode plate provided in the first aspect.

In the above technical solution, the battery has better dynamic performance by setting the positive electrode plate provided in the first aspect.

In a third aspect, embodiments of the present application provide an electrical apparatus including the battery provided in the second aspect.

In the above technical solution, the electrical apparatus has better dynamic performance by setting the battery provided in the second aspect.

## DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.

FIG. 1 is a schematic structural diagram of a vehicle provided in some embodiments of the present application;
Fig. 2 is an exploded view of a battery according to some embodiments of the present application;
Fig. 3 is an exploded diagram of the battery cell shown in Fig. 2;
FIG. 4 is a schematic partial structural diagram of an electrode assembly provided in some embodiments of the present application; and
FIG. 5 is a schematic partial structural diagram of a positive electrode plate provided in some embodiments of the present application.

Reference numerals:

vehicle 1000;
battery 100; controller 200; motor 300;
box body 10; first part 11; second part 12; accommodating space 13;
battery cell 20; shell 21, electrode assembly 22; electrode terminal 23; pressure relief structure 24;
case 211; cover 212; positive electrode plate 221; negative electrode plate 222; separator 223;
positive electrode current collector 2211; positive electrode active material layer 2212;
negative composite current collector 2221; negative active material layer 2222.

## DETAILED DESCRIPTION

The embodiments of the technical solution of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated.

In the description of the embodiments of the present application, the technical terms "outer", "inner", and the like indicate orientations or positional relationships based on the orientations or positional relationships shown in the drawings, and are intended only to facilitate and simplify the description of the embodiments of the present application, and are not intended to indicate or imply that the apparatus or element referred to must have a particular orientation, or be constructed and operated in a particular orientation, and therefore should not be construed as limitation of the embodiments of the present application.

In the description of the embodiments of the present application, unless otherwise explicitly stipulated and defined, the technical terms of "mount", "connected", "connecting" and "fixed" should be understood in a broad sense. For example, there may be a fixed connection, a detachable connection, or an integrated connection; and there may be a direct connection or an indirect connection through an intermediate medium. For those of ordinary skill in the art, the specific meanings of the aforementioned terms in the embodiments of the present application can be understood according to specific situations.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the embodiments of the present application, the same reference numerals indicate the same components and, for the sake of brevity, the detailed description of the same components is omitted in the different embodiments. It should be understood that the height, length, width and other sizes of the various components in the embodiments of the present application shown in the drawings, as well as the overall height, length, width and other sizes of an integrated apparatus, are for illustrative purposes only, and should not constitute any limitation to the present application.

Batteries made of a positive electrode plate obtained by physically mixing different active substances can give full play to the advantages of different materials and improve battery performance. However, the inventors of the present application found that some of the positive electrode plates obtained by physical mixing have the problem of poor dynamic performance. After analysis, it is believed that this may be due to the difference in the maximum shrinkage rates of the two active substances during the cycle, which cannot shrink or expand synchronously, resulting in the separation of the two substances, the failure of the contact between them, and the deterioration of the conductive network, thereby leading to a significant increase in impedance.

The embodiments of the present application provide a positive electrode plate comprising at least two positive electrode active material layers;

wherein two adjacent positive electrode active material layers respectively comprise a first active material and a second active material; the maximum shrinkage rate of the first active material is T1, and the maximum shrinkage rate of the second active material is T2;
T1 and T2 satisfy the following relationship:

$$T1-T2 \geq 0.3\%;$$

and
the maximum shrinkage rate refers to the maximum change in the shrinkage or expansion of the unit cell volume of the positive electrode active material during the charge and discharge process.

It should be noted that the above-mentioned "maximum change" refers to the change in unit cell volume between the full charge state and the full discharge state.

Specifically, full charge means charging the battery cell to 100% SOC state. Charge and discharge strategy: At 25°C, the battery is charged at a constant current of 0.3C to the upper limit of the operating voltage range of the active materials, and then undergoes constant voltage charging at this upper limit voltage until the current is cut off at 0.02C. This state is a full charge.

The unit cell volume of the positive electrode material in the initial state corresponds to the unit cell volume of the battery in the full discharge state. The full discharge state means that the battery is discharged at a constant current of 0.3C to the lower limit of the operating voltage range of the active material.

The battery using the above positive electrode plate can improve the dynamic performance of the battery.

The electrical device including the battery has more excellent dynamic performance.

For ease of description, the following embodiments are illustrated by taking a lithium-ion battery in an embodiment of the present application as an example. The electrical apparatus is illustrated by taking a vehicle in an embodiment of the present application as an example.

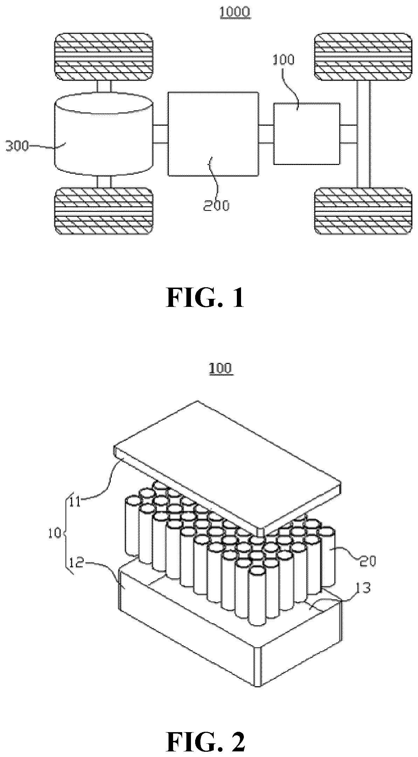

Referring to FIG. 1, FIG. 1 is a schematic diagram of a structure of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is used to control the battery 100 to supply power to the motor 300, for example, for the operating power demand when the vehicle 1000 is starting, navigating and driving.

In some embodiments of the present application, the battery 100 can not only be used as the operating power source of the vehicle 1000, but also be used as a driving power source of the vehicle 1000 to replace or partially replace fuel or natural gas to provide driving power for the vehicle 1000.

The battery 100 in the present application refers to a single physical module that includes one or more battery cells 20 to provide voltage and capacity. The battery 100 generally includes a box 10 for packaging one or more battery cells 20. The box body 10 can prevent liquids or other foreign matters from affecting charging or discharging of the battery cells 20.

Referring to FIG. 2, FIG. 2 is an exploded view of a battery 100 provided in some embodiments of the present application. The battery 100 may include a box body 10 and a battery cell 20. The battery cell 20 is accommodated in the box body 10. The box body 10 is used to accommodate the battery cell 20, and the box body 10 may be of various structures. In some embodiments, the box body 10 may include a first part 11 and a second part 12. The first part 11 and the second part 12 are covered by each other. The first part 11 and the second part 12 jointly define the accommodating space 13 for accommodating the battery cell 20. The second part 12 can be of a hollow structure with one end open, the first part 11 is of a plate-like structure, and the first part 11 covers the open side of the second part 12 to form the box body 10 having the accommodating space 13; and both the first part 11 and the second part 12 can also be of a hollow structure with one side open, and the open side of the first part 11 covers the open side of the second part 12 to form the box body 10 having the accommodating space 13. Of course, the first portion 11 and the second portion 12 may be of a variety of shapes, such as a cylinder or a cuboid.

There may be one or more battery cells 20 in the battery 100. If there are a plurality of battery cells 20, the plurality of battery cells 20 may be connected in series or parallel or in a mixed connection, where the mixed connection means that the plurality of battery cells 20 are connected in both series and parallel. The plurality of battery cells 20 may be directly connected in series or in parallel or may be in parallel-series connection, and then an entirety composed of all the plurality of battery cells 20 is accommodated in the box body 10. The plurality of battery cells 20 may also be connected in series or in parallel or in parallel-series first to form modules, and the plurality of battery modules may then be connected in series or in parallel or in parallel-series to form an entirety that is accommodated in the box body 10. The battery 100 can also include other structures, for example, the plurality of battery cells 20 can be electrically connected through a convergence component so as to realize the parallel connection or series connection or series-parallel connection of the plurality of battery cells 20.

Each battery cell 20 may be a lithium-ion battery, such as a secondary battery or a primary battery; or it may be a lithium-sulfur battery, a sodium-ion battery or a magnesium-ion battery, but is not limited thereto.

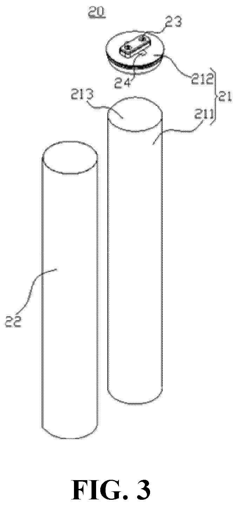

Referring to FIG. 3, FIG. 3 is an exploded diagram of the battery cell 20 shown in FIG. 2. The battery cell 20 refers to a smallest unit constituting a battery 100. The battery cell 20 may include a shell 21, an electrode assembly 22, and an electrolyte solution, where the electrode assembly 22 and the electrolyte are both accommodated within the shell 21.

The shell 21 may include a case 211 and a cover 212. The case 211 is an assembly for matching the cover 212 to form the internal sealed space of the battery cell 20. The formed sealed space may be used to accommodate the electrode assembly 22, the electrolyte solution and other components. The cover 212 refers to a component that covers the opening of the case 211 to isolate the internal environment of the battery cell 20 from the external environment. The shape of the cover 212 can be adapted to the shape of the case 211 to match the case 211. Functional components such as an electrode terminal 23 and a pressure relief structure 24 can also be provided on the cover 212. A sealing ring may be disposed between the opening of the case 211 and the cover 212 to achieve sealing between the case 211 and the cover 212.

The case 211 and the cover 212 may be of various shapes and sizes, such as a cuboid, a cylinder and a hexagonal prism. Specifically, the shape of the case 211 and the cover 212 may be determined according to the specific shape and size of the electrode assembly 22. The case 211 and the cover 212 may be made of various materials, such as but not limited to metals of copper, iron, aluminum, stainless steel, aluminum alloy, etc. The sealing ring may be made of various materials, such as but not limited to materials that are resistant to electrolyte corrosion, have high toughness and are resistant to fatigue, including PP (polypropylene), PC (polycarbonate), PET (polyethylene terephthalate), etc. A plating may be formed on the outer surface of the case 211, and the plating may be made of various materials, such as but not limited to corrosion-resistant materials including Ni, Cr, etc.

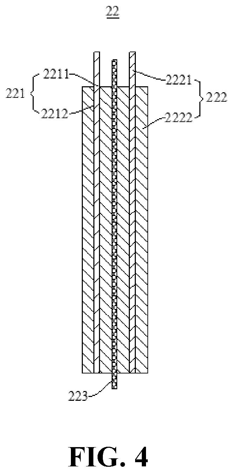

Referring to FIG. 4, the electrode assembly 22 may consist of a positive electrode plate 221, a negative electrode plate 222, and a separator 223. The separator 223 is provided between the positive electrode plate 221 and the negative electrode plate 222 and functions to separate. The electrode assembly 22 may be of a wound structure or a stacked structure, which is not limited in the embodiments of the present application.

Referring to FIG. 4, the negative electrode plate 222 includes a negative electrode current collector 2221 and a negative electrode active material layer 2222, the negative electrode current collector 2221 may be made of copper material, and the negative electrode active material layer 2222 includes a negative electrode active material. The negative electrode active material includes at least one of graphite, silicon, silicon alloy or tin alloy.

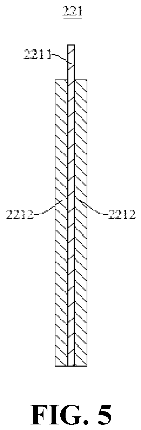

Referring to FIG. 5, the positive electrode plate 221 includes a positive electrode current collector 2211 and a positive electrode active material layer 2212. Taking the lithium-ion battery cell 20 as an example, the material of the positive electrode current collector 2211 may be aluminum. The positive electrode active material layer 2212 comprises a positive electrode active material.

Further, in some embodiments of the present application, the above positive electrode plate 221 includes at least two positive electrode active material layers 2212.

Two adjacent positive electrode active material layers respectively comprise a first positive electrode active material and a second positive electrode active material; under the same testing conditions, the maximum shrinkage rate of the first positive electrode active material during the charge and discharge process is T1, and the maximum shrinkage rate of the second positive electrode active material during the charge and discharge process is T2;

T1 and T2 satisfy the following relationship:

$$T1-T2 \geq 0.3\%;$$

and

the maximum shrinkage rate refers to the change in the shrinkage or expansion of the unit cell volume of the positive electrode active material during the charge and discharge process.

Compared with a single-layer mixed positive electrode active material layer formed by directly physically mixing the first positive electrode active material and the second positive electrode active material, in the above technical solution, when T1-T2 of the first positive electrode active material and the second positive electrode active material is $\geq$ 0.3%, the positive electrode plate is provided to include at least two positive electrode active material layers, which can improve the deterioration of the conductive network of the active materials caused by the asynchronous changes of active materials with different shrinkage rates, thereby improving the dynamic performance of the battery.

Further, in some embodiments of the present application, the test method for the maximum shrinkage rate is as follows:

A certain active substance is used as the only positive electrode active material, and is mixed with a binder and a conductive agent in a ratio of 97%wt: 1.5%wt: 1.5%wt to prepare a fresh electrode plate, and the unit cell volume a of the positive electrode active material in the initial state is tested by XRD. A battery is prepared using the electrode plate, the electrode plate is disassembled after the battery is fully charged, and the fully charged electrode plate is tested by XRD to obtain the unit cell volume b of the positive electrode active material in the full charge state; then the maximum shrinkage rate of the positive electrode active material is (a-b)/a.

The unit cell volume a of the positive electrode active material in the initial state corresponds to the unit cell volume of the battery in the full discharge state. The full discharge state means that the battery is discharged at a constant current of 0.3C to the lower limit of the operating voltage range of the active material; and

full charge means charging the battery cell to 100% SOC state. Charge and discharge strategy: At 25°C, the battery is charged at a constant current of 0.3C to the upper limit of the operating voltage range of the active materials, and then undergoes constant voltage charging at this upper limit voltage until the current is cut off at 0.02C. This state is a full charge.

An X-ray diffraction pattern of the active material is obtained by testing the electrode plate by XRD as above, and the structure is refined by a Rietveld method to obtain the unit cell volume of the active material.

Further, in some embodiments of the present application, the value rang of T1 is 1%-7%. Further optionally, in some embodiments of the present application, the value rang of T1 is 3%-6.5%. When T1 is too large, the material shrinks severely, affecting the contact interface between materials and reducing the dynamic performance. Reasonably setting the T1 value range is beneficial to improving the dynamic performance of the battery.

Further, in some embodiments of the present application, the value rang of T2 is 0.3%-5.5%.

Further optionally, in some embodiments of the present application, the value rang of T2 is 0.5%-3%.

Among the currently available positive electrode materials, the smaller maximum shrinkage rate is mainly within this range. When used together with materials with a larger maximum shrinkage rate, the difference in material shrinkage rate is large, and the layered arrangement of the active material layer of the present application is more suitable.

Further, in some embodiments of the present application, the first positive electrode active material has a $D_V50$ of 5 $\mu$m-15 $\mu$m.

The above $D_V50$ means: when the particles of the first positive electrode active material are accumulated from small to large to an accumulated volume accounting for 50% of the total volume, all the particles of the first positive electrode active material have a particle size less than a specific value, and this value is the value of Dv50.

The first positive electrode active material with the maximum shrinkage rate T1 is selected to have a $D_V50$ of 5 $\mu$m-15 $\mu$m. The larger the particle size, the more pores can be formed during the charge and discharge process, which is beneficial to the electrolyte infiltration and ion conduction.

Further, in some embodiments of the present application, the second positive electrode active material has a $D_V50$ of 0.2 $\mu$m-5 $\mu$m.

The second positive electrode active material with the maximum shrinkage rate T2 is selected to have a $D_V50$ of 0.2 $\mu$m-5 $\mu$m, and has a small particle size, which can cooperate with the first positive electrode active material with a larger particle size to further improve the battery charge and discharge cycle effect.

The above $D_V50$ means: when the particles of the second positive electrode active material are accumulated from small to large to an accumulated volume accounting for 50% of the total volume, all the particles of the second positive electrode active material have a particle size less than a specific value, and this value is the value of Dv50.

Further, in some embodiments of the present application, the $D_V50$ value of the first positive electrode active material is greater than or equal to 5 times the $D_V50$ value of the second positive electrode active material.

The $D_V50$ of the first positive electrode active material and the second positive electrode active material is controlled to satisfy the above-mentioned proportional relationship; the high mechanical strength of the active material with a smaller particle size at the same compaction density will alleviate this situation to a certain extent, and the gaps between the large-size particles will not be completely filled, and the ion conduction is better than that of the physical mixed system. The two effects complement each other, thereby effectively improving the battery dynamics.

In some optional embodiments, the $D_V50$ value of the first positive electrode active material is greater than or equal to 5 times the $D_V50$ value of the second positive electrode active material, and less than or equal to 50 times the $D_V50$ value of the second positive electrode active material.

In some optional embodiments, the $D_V50$ value of the first positive electrode active material is greater than or equal to 5 times the $D_V50$ value of the second positive electrode active material, and less than or equal to 35 times the $D_V50$ value of the second positive electrode active material.

By further limiting the particle size ratio of the first positive electrode active material and the second positive electrode active material within the above range, it is helpful to improve the excessive filling of the large particle size active material with the small particle size material when the particle size difference is too large, resulting in insufficient gaps, reduced porosity and worsened ionic impedance. Further, in some embodiments of the present application, a transition layer is formed between the positive electrode active material layer where the first positive electrode active material is located and the positive electrode active material layer where the second positive electrode active material is located.

By setting the $D_V50$ of the first positive electrode active material to 5 $\mu$m-15 $\mu$m and the $D_V50$ of the second positive electrode active material to 0.2 $\mu$m-5 $\mu$m, the particle size of the active material in the first positive electrode active material is relatively large; and the particle size of the active material in the first positive electrode active material is larger than that of the second positive electrode active material. There is a certain difference in particle size between the first positive electrode active material layer and the second positive electrode active material layer, so that a transition layer in which active material particles of different sizes coexist will be formed between the layers, and the bonding effect between the active layers is better, which ensures the improved effect of the dynamic performance between the active layers.

It should be noted that the above transition layer can be clearly seen by enlarging the cross section.

Further optionally, the transition layer has a thickness of 0.2 $\mu$m-2 $\mu$m.

The thickness of the transition layer refers to the average thickness of the transition layer. An excessively small or large thickness of the transition layer may have a negative impact on the dynamic performance of the battery. If the transition layer is too thick, it may form a structure similar to a mixed layer, affecting the dynamic performance; and if the transition layer is too thin, the adhesion between the two layers may be weakened, affecting the dynamic performance.

Further optionally, the transition layer has a thickness of 0.3 $\mu$m-1.9 $\mu$m.

By way of example, the transition layer has a thickness of 0.4 $\mu$m, 0.5 $\mu$m, 0.6 $\mu$m, 0.7 $\mu$m, 0.8 $\mu$m, 0.9 $\mu$m, 1 $\mu$m, 1.1 $\mu$m, 1.2 $\mu$m, 1.3 $\mu$m, 1.4 $\mu$m, 1.5 $\mu$m, 1.6 $\mu$m, 1.7 $\mu$m or 1.8 $\mu$m.

Further optionally, in some embodiments of the present application, the above first positive electrode active material has a $D_V50$ of 6 $\mu$m - 14 $\mu$m. The second positive electrode active material has a $D_V50$ of 0.3 $\mu$m - 4.9 $\mu$m.

By way of example, in some embodiments of the present application, the above first positive electrode active material has a $D_V50$ of 6 $\mu$m, 7 $\mu$m, 8 $\mu$m, 9 $\mu$m, 10 $\mu$m, 11 $\mu$m, 12 $\mu$m, 13 $\mu$m or 14 $\mu$m.

By way of example, in some embodiments of the present application, the above second positive electrode active material has a $D_V50$ of 0.2 $\mu$m, 0.3 $\mu$m, 0.5 $\mu$m, 0.8 $\mu$m, 1 $\mu$m, 1.2 $\mu$m, 1.5 $\mu$m, 2 $\mu$m, 2.5 $\mu$m, 3 $\mu$m, 3.5 $\mu$m, 4 $\mu$m or 4.5 $\mu$m.

Further, in some embodiments of the present application, the first positive electrode active material has Dv90-Dv10$\leq$20 $\mu$m. Further optionally, the particle size distribution of the first positive electrode active material satisfies: $9 \leq D_V90 - D_V10 \leq 20$ $\mu$m.

In the above embodiments, Dv90 means: when the particles of the first positive electrode active material are accumulated from small to large to an accumulated volume accounting for 90% of the total volume, all the particles of the first positive electrode active material have a particle size less than a specific value, and this value is the value of Dv90. Dv10 means: when the particles of the first positive electrode active material are accumulated from small to large to an accumulated volume accounting for 10% of the total volume, all the particles of the first positive electrode active material have a particle size less than a specific value, and this value is the value of Dv10.

By limiting $D_V90 - D_V10$ in the first positive electrode active material within the above range, the particle size of the active material in the first positive electrode active material layer is relatively concentrated. The first active material has a larger particle size, and the difference between $D_V90$ and $D_V10$ can be allowed to be larger.

Further, in some embodiments of the present application, the second positive electrode active material has $D_V90 - D_V10 \leq 9$ $\mu$m.

In the above embodiments, Dv90 means: when the particles of the second positive electrode active material are accumulated from small to large to an accumulated volume accounting for 90% of the total volume, all the particles of the second positive electrode active material have a particle size less than a specific value, and this value is the value of Dv90. Dv10 means: when the particles of the second positive electrode active material are accumulated from small to large to an accumulated volume accounting for 90% of the total volume, all the particles of the second positive electrode active material have a particle size less than a specific value, and this value is the value of Dv90.

By limiting $D_V90 - D_V10 \leq 9$ $\mu$m in the second positive electrode active material, the particle size of the active material in the second positive electrode active material layer is relatively concentrated. The second active material has a smaller particle size, so the difference between $D_V90$ and $D_V10$ is relatively small.

Further, in some embodiments of the present application, $D_V90 - D_V10 \leq 20$ $\mu$m is limited in the first positive electrode active material and $D_V90 - D_V10 \leq 9$ $\mu$m is limited in the second positive electrode active material. By making the particle size of the active material in the first positive electrode active material layer relatively concentrated and the particle size of the active material in the second positive electrode active material layer relatively concentrated, it can be ensured that the shrinkage and expansion of the active material particles in the single layer are more synchronized, the contact between the particles may not be deteriorated, and the improvement effect of the dynamic performance in the single layer (the first positive electrode active material layer or the second positive electrode active material layer) is better.

By way of example, in some embodiments of the present application, it is set in the first positive electrode active material that $D_V90 - D_V10 = 19$ $\mu$m; or $D_V90 - D_V10 = 18$ $\mu$m; or $D_V90 - D_V10 = 17$ $\mu$m; or $D_V90 - D_V10 = 16$ $\mu$m; or $D_V90 - D_V10 = 15$ $\mu$m; or $D_V90 - D_V10 = 10$ $\mu$m; or $D_V90 - D_V10 = 5$ $\mu$m.

Further by way of example, in some embodiments of the present application, it is set in the second positive electrode active material that $D_V90 - D_V10 = 8$ $\mu$m; or $D_V90 - D_V10 = 7$ $\mu$m; or $D_V90 - D_V10 = 6$ $\mu$m; or $D_V90 - D_V10 = 5$ $\mu$m; or $D_V90 - D_V10 = 4$ $\mu$m; or $D_V90 - D_V10 = 3$ $\mu$m; or $D_V90 - D_V10 = 2$ $\mu$m; or $D_V90 - D_V10 = 1$ $\mu$m.

According to the embodiments of the present application, the aforementioned Dv10, Dv50 or Dv90 is determined by a particle size analyzer-laser diffraction method. Specifically, reference can be made to the standard GB/T 19077-2016, and a laser diffraction scattering particle size analyzer is used for measurement according to the manufacturer's instructions.

Further, in some embodiments of the present application, any of the positive electrode active material layers comprises a plurality of active materials; and the difference in the maximum shrinkage rate of the plurality of active materials does not exceed 0.3%;

T1 is the minimum value among a plurality of maximum shrinkage rates of the plurality of active materials in the first positive electrode active material; and

T2 is the maximum value among a plurality of maximum shrinkage rates of the plurality of active materials in the second positive electrode active material.

By setting in any of the positive electrode active material layers, the difference in the maximum shrinkage rate of the plurality of active materials during the charge and discharge process does not exceed 0.3%. This combination of active particles with different shrinkage rates that differ by no more than 0.3% is beneficial to improving the impedance and dynamic performance of the battery.

Further, in some embodiments of the present application, any of the positive electrode active material layers comprises a plurality of active materials; and the difference in the maximum shrinkage rate of the plurality of active materials exceeds 0.3%;

in terms of mass percentage, the plurality of active materials include 85%-100% main active substances; 0-15% trace active substances;

T1 and T2 are both the maximum shrinkage rates of the main active substances.

The same active material layer includes active particles with different shrinkage rates that differ by more than 0.3%. By maintaining the mass proportion of trace active substances between 0-15%, the negative impact of asynchronous shrinkage and expansion can be reduced.

By way of example, in the above embodiments, if the maximum shrinkage rate of the trace active substances with a small proportion (such as 10%) among multiple active substances in the same layer differs from the maximum shrinkage rate of other main active substances by more than 0.3%, then the maximum shrinkage rate of this layer refers to the shrinkage rate of the main active substance.

Further optionally, in terms of mass percentage, the above main active substances are 86%-99%; and the above trace active substances are 1-14%.

By way of example, in terms of mass percentage, the main active substances are 86% and the trace active substances are 14%; or the main active substances are 90% and the trace active substances are 10%; or the main active substances are 95% and the trace active substances are 5%.

Further, in some embodiments of the present application, T1-T2>6%, the thickness of the positive electrode active material layer where the first positive electrode active material is located is H1; the thickness of the positive electrode active material layer where the second positive electrode active material is located is H2; and

H1:H2 is (7:3)-(1:9).

When T1-T2>6%, when the shrinkage rate difference between the first positive electrode active material and the second positive electrode active material in the two positive electrode active material layers is too large, by setting H1:H2 to (7:3)-(1:9), the expansion of the overall active layer can be limited, the integrity of the electrode structure can be ensured, and the rapid deterioration of dynamics (impedance) caused by changes in the electrode structure during the cycle can be slowed down.

Further, in some embodiments of the present application, the positive electrode plate includes a positive electrode current collector;

the positive electrode active material layer where the first positive electrode active material is located is close to the current collector; and

the positive electrode active material layer where the second positive electrode active material is located is far away from the current collector.

The first positive electrode active material has a larger particle size and a larger shrinkage rate, and is easy to form more pores during the charge and discharge process, which is beneficial to the transmission of lithium ions. The first positive electrode active material layer is close to the current collector, and the second positive electrode active material has a smaller particle size and a smaller shrinkage rate, and is far away from the current collector. During the charge and discharge cycle, the outer layer can limit the shrinkage and expansion of the inner layer to a certain extent, reduce the deformation of the electrode, reduce the deterioration of the conductive network of the active material, and reduce the impedance growth; at the same time, the shrinkage and expansion of the inner layer with a large shrinkage rate and a large particle size active material can create more pores, accommodate more electrolyte than the initial state, and also achieve the effect of retaining liquid.

Further, in some embodiments of the present application, the second positive electrode active material includes at least one of a spinel structure positive electrode material and an olivine structure positive electrode material.

The second positive electrode active material includes at least one of a spinel structure positive electrode material and an olivine structure positive electrode material, and it is easy to obtain a positive electrode active material layer with a smaller shrinkage rate.

Further, in some embodiments of the present application, the second positive electrode active material includes $LiMPO_4$, wherein M includes Mn and non-Mn elements.

It should be noted that the above $LiMPO_4$ is not a specific molecular structure formula, but a general expression of lithium manganese-containing phosphate.

Further, in some embodiments of the present application, the non-Mn elements include one or both of a first doping element and a second doping element, the first doping element is used for manganese-site doping, and the second doping element is used for phosphorus-site doping.

Further, in some embodiments of the present application, the first doping element includes one or more elements of Zn, Al, Na, K, Mg, Mo, W, Ti, V, Zr, Fe, Ni, Co, Ga, Sn, Sb, Nb, and Ge.

Further, in some embodiments of the present application, the first doping element includes at least two of Fe, Ti, V, Ni, Co, and Mg.

Further, in some embodiments of the present application, the second doping element includes one or more elements of B, S, Si, and N.

In some embodiments, a method for preparing the compound $Li_{1+x}Mn_{1-y}A_yP_{1-z}R_zO_4$ may include the following steps:

(1) dissolving a manganese source, an element A source to be doped at the manganese site, and an acid in a solvent and stirring to generate a suspension of a manganese salt doped with the element A, filtering the suspension and drying the filter cake to obtain a manganese salt doped with the element A;
(2) adding a lithium source, a phosphorus source, an element R source, a solvent and the manganese salt doped with the element A obtained in step (1) into a reaction container, grinding and mixing to obtain a slurry;
(3) transferring the slurry obtained in step (2) to a spray drying device for spray drying and granulation to obtain granules; and
(4) sintering the particles obtained in step (3) to obtain a positive electrode active material.

In any of embodiments, the manganese source may be a manganese-containing substance known in the art that can be used to prepare lithium manganese phosphate. For example, the manganese source may be selected from one of elemental manganese, manganese dioxide, manganese phosphate, manganese oxalate and manganese carbonate, or a combination thereof.

The acid is selected from one or more of hydrochloric acid, sulfuric acid, nitric acid, phosphoric acid, and organic acids such as oxalic acid, and for example can be oxalic acid. The element R source is selected from at least one of sulfate, borate, nitrate and silicate of element R. The element A source is selected from at least one of an elementary substance, oxide, phosphate, oxalate, carbonate and sulfate of A.

Further, in some embodiments of the present application, the second positive electrode active material includes $Li_{1+x}Mn_{1-y}A_yP_{1-z}R_zO_4$, wherein x is any value in the range of -0.100-0.100, y is any value in the range of 0.001-0.500, z is any value in the range of 0.001-0.100, A includes one or more elements of Zn, Al, Na, K, Mg, Mo, W, Ti, V, Zr, Fe, Ni, Co, Ga, Sn, Sb, Nb, and Ge, and R includes one or more elements of B, S, Si, and N.

Further, in some embodiments of the present application, the second positive electrode active material includes $Li_aA_eMn_{1-f}BrP_{1-g}C_gO_{4-n}D_n$;

wherein A includes one or more elements of Zn, Al, Na, K, Mg, Nb, Mo and W;
B includes one or more elements of Ti, V, Zr, Fe, Ni, Mg, Co, Ga, Sn, Sb, Nb, and Ge;
C includes one or more elements of B, S, Si, and N;
D includes one or more elements of S, F, Cl, and Br;
a is selected from the range of 0.9 to 1.1, e is selected from the range of 0.001 to 0.1, f is selected from the range of 0.001 to 0.5, g is selected from the range of 0.001 to 0.1, n is selected from the range of 0.001 to 0.1, and the second positive active material is electrically neutral.

It should be noted that $Li_aA_xMn_{1-y}B_yP_{1-z}C_zO_{4-n}D_n$ compound is actually a specific $LiMPO_4$ material. The preparation method therefor may refer to $Li_{1+x}Mn_{1-y}A_yP_{1-z}R_zO_4$, and is not limited here.

In some embodiments, the positive electrode active material further has a carbon-containing cladding layer.

The conductivity of the positive electrode active material is improved by introducing a carbon-containing cladding layer. At this time, the structure of the positive electrode active material is actually a core-shell structure with $LiMPO_4$ as the core and the surface of the core clad with a cladding layer.

Optionally, the carbon content of the carbon layer is not less than 1.2%.

Further, in some embodiments of the present application, the first positive electrode active material includes a layered structure positive electrode material.

The first positive electrode active material includes a layered structure positive electrode material, and it is easy to obtain a positive electrode active material layer with a large shrinkage rate.

Further, in some embodiments of the present application, the first positive electrode active material includes at least one of a lithium nickel cobalt manganese oxide ternary material, a lithium nickel cobalt aluminium oxide ternary material, and a lithium nickel cobalt manganese aluminum oxide ternary material, or includes at least one of doped or clad materials of the above ternary materials.

The battery is accompanied by Li de-intercalation and consumption during the charge and discharge process, and the molar content of Li is different when the battery is discharged to different states.

In the context of positive electrode materials listed in the present application, the molar content of Li is at the initial state of the material, that is, the state before adding the material, and the molar content of Li may change after the positive electrode material is used in the battery system and subjected to charge and discharge cycles.

In addition, due to different material preparation processes and conditions, the molar content of the O element is usually not strictly the coefficient of the O element in the chemical formula, and may fluctuate. For example, the molar content of the O element in $Li_{1+x}Mn_{1-y}A_yP_{1-z}R_zO_4$ is not strictly 4.

Further, in some embodiments of the present application, the positive electrode plate includes a positive electrode current collector;

the at least two positive electrode active material layers are stacked in sequence on the surface of the positive electrode current collector, and the porosity of the at least two positive electrode active material layers decreases in sequence away from the positive electrode current collector.

By setting the at least two active material layers to be stacked in sequence on the surface of the current collector and the porosity of the at least two active material layers to decrease in sequence away from the current collector, the electrolyte and the positive electrode plate can be fully infiltrated to ensure that the conduction of lithium ions is not affected.

Further, in some embodiments of the present application, the positive electrode active material layer in contact with the positive electrode current collector has a porosity of $\geq$45%; optionally, the positive electrode active material layer in contact with the positive electrode current collector has a porosity of $\geq$60%.

In the above ratio range, the lithium ion conduction effect is improved.

By way of example, the positive electrode active material layer in contact with the positive electrode current collector has a porosity of 46%, 50%, 55%, 65% or 70%.

Further, in some embodiments of the present application, the outermost positive electrode active material layer has a porosity of >25%; optionally, the outermost positive electrode active material layer has a porosity of $\geq$50%.

In the above ratio range, the lithium ion conduction effect is further improved.

By way of example, the above outermost positive electrode active material layer has a porosity of 30%, 35%, 40%, 40%, 55% or 65%.

According to the embodiments of the present application, the porosity can be determined by a gas replacement method. Specifically, according to the embodiments of the present application, it can be determined by referring to GB/T 24586-2009 through the following steps: the electrode plate is immersed in dimethyl carbonate (DMC), cleaned and dried, and if the electrode plate is fresh, no cleaning is required. The sample is put into a sample cup, the sample number is recorded to calculate the apparent volume, the sample is placed in a true density tester, and the true volume is determined using the gas displacement method. The porosity of the electrode plate is the percentage of the pore volume in the electrode plate to the total volume of the electrode. The calculation formula is: Porosity = (V-V0)/V$\times$100%, where V0 is the true volume and V is the apparent volume; Apparent volume V=S*H*A, S is the surface area of the electrode plate, H is the thickness of the electrode plate, and A is the number of the electrode plate samples.

Furthermore, in some embodiments of the present application, the mass ratio of the active material in each positive electrode active material layer to the total positive electrode active material of the positive electrode plate is 10%-90%.

By controlling the mass ratio of the active material in each positive electrode active material layer to the total positive electrode active material of the positive electrode plate to be 10%-90%, an optimal thickness of the positive electrode active material layer can be obtained to ensure the dynamic performance of the battery.

Further optionally, the mass ratio of the active material in each positive electrode active material layer to the total positive electrode active material of the positive electrode plate is: 15%-85%. By way of example, the mass ratio of the active material in each positive electrode active material layer to the total positive electrode active material of the positive electrode plate is: 20%, 30%, 40%, 50%, 60%, 70% or 80%.

Further, in some embodiments of the present application, the active material layer further includes a conductive agent and a binder;

in terms of mass percentage, the active material is 89%-98%; the conductive agent is 0.4%-5%; and the binder is 0.6%-6%.

Within the above proportion range, a positive electrode active material slurry with excellent comprehensive performance can be obtained.

Further optionally, in terms of mass percentage, the active material is 90%-97%; the conductive agent is 0.5%-4.8%; and the binder is 0.7%-5.9%.

By way of example, in terms of mass percentage, the active material is 91%, the conductive agent is 4%, and the binder is 5%; or in terms of mass percentage, the active material is 95%, the conductive agent is 1%, and the binder is 4%; or in terms of mass percentage, the active material is 96%, the conductive agent is 0.5%, and the binder is 3.5%.

Some specific examples are listed below to better illustrate the present application.

[Second positive electrode active material]

A. A method for preparing a compound $LiMn_{0.22}Fe_{0.78}PO_4$ comprises:

Step S1: Preparation of Fe-doped manganese oxalate

252.9 g of manganese carbonate and 903.7 g of ferrous carbonate were added to a mixer and mixed thoroughly for 6 h. Then, the obtained mixture was transferred into a reactor, 5 L of deionized water and 1260.6 g of oxalic acid dihydrate were added, heated to 80°C, fully stirred at 500 rpm for 6 h, and mixed evenly until the reaction was terminated and no bubbles were generated, to obtain a Fe-doped manganese oxalate suspension. Then the suspension was filtered, oven dried at 120°C, and then sanded to obtain manganese iron oxalate particles with a particle size of 100 nm.

Step S2: Preparation of $LiMn_{0.22}Fe_{0.78}PO_4$

1791.4 g of manganese iron oxalate ($C_2O_4Mn_{0.22}Fe_{0.78} \cdot 2H_2O$) prepared in step S1, 369.4 g of lithium carbonate, and 1150.1 g of ammonium dihydrogen phosphate were taken and added to 20 L of deionized water, fully stirred, and uniformly mixed and reacted at 80°C for 10 h, to obtain a slurry. The slurry was transferred to a spray drying device for spray drying and granulation, and dried at a temperature of 250°C to obtain a powder. Under a protective atmosphere (90% nitrogen and 10% hydrogen), the powder was sintered in a roller kiln at 700°C for 4 h.

A method for preparing a carbon clad $LiMn_{0.22}Fe_{0.78}PO_4$ comprises:

1791.4 g of manganese iron oxalate ($C_2O_4Mn_{0.22}Fe_{0.78} \cdot 2H_2O$) prepared in step S1, 369.4 g of lithium carbonate, 1150.1 g of ammonium dihydrogen phosphate and 0.005 mol of sucrose were taken and added to 20 L of deionized water, fully stirred, and uniformly mixed and reacted at 80°C for 10 h, to obtain a slurry. The slurry was transferred to a spray drying device for spray drying and granulation, and dried at a temperature of 250°C to obtain a powder. Under a protective atmosphere (90% nitrogen and 10% hydrogen), the powder was sintered in a roller kiln at 700°C for 4 h.

The preparation steps of other undoped lithium manganese iron phosphate materials are the same as the preparation steps of the aforementioned compound A, the only difference being that the contents of manganese carbonate and ferrous carbonate are changed to satisfy the molar ratio of manganese to iron in the chemical formula of the corresponding compound.

They can also be directly purchased from commercial source.

B. A method for preparing a compound $Li_{1.001}Mn_{0.999}Fe_{0.001}P_{0.999}Si_{0.001}O_4$ comprises:

Step S1: Preparation of Fe-doped manganese oxalate

1148.2 g of manganese carbonate and 1.2 g of ferrous carbonate were added to a mixer and mixed thoroughly for 6 h. Then, the obtained mixture was transferred into a reactor, 5 L of deionized water and 1260.6 g of oxalic acid dihydrate were added, heated to 80°C, fully stirred at 500 rpm for 6 h, and mixed evenly until the reaction was terminated and no bubbles were generated, to obtain a Fe-doped manganese oxalate suspension. Then the suspension was filtered, oven dried at 120°C, and then sanded to obtain manganese iron oxalate particles with a particle size of 100 nm.

Step S2: Preparation of $Li_{1.001}Mn_{0.999}Fe_{0.001}P_{0.999}Si_{0.001}O_4$

1789.6 g of manganese iron oxalate ($C_2O_4Mn_{0.999}Fe_{0.001} \cdot 2H_2O$) prepared in step S1, 369.8 g of lithium carbonate, 1148.9 g of ammonium dihydrogen phosphate and 0.8 g of silicic acid were taken and added to 20 L of deionized water, fully stirred, and uniformly mixed and reacted at 80°C for 10 h, to obtain a slurry. The slurry was transferred to a spray drying device for spray drying and granulation, and dried at a temperature of 250°C to obtain a powder. Under a protective atmosphere (90% nitrogen and 10% hydrogen), the powder was sintered in a roller kiln at 700°C for 4 h.

The preparation steps of lithium manganese iron phosphate materials doped with other elements (such as Ti) are the same as the preparation steps of the aforementioned compound B, the only difference being that silicic acid is replaced with the source of the corresponding element (such as titanium tetrachloride) and the ratio of raw materials is adjusted to satisfy the molar ratio in the chemical formula of the corresponding compound.

They can also be directly obtained through commercial purchase.

[First positive electrode active material]

The layered structure positive electrode material is obtained through commercial purchase.

Example 1

1) Preparation of positive electrode plate

The aforementioned first positive electrode active material was selected, mixed with a conductive agent and a binder in a certain mass ratio, and dispersed in N-methylpyrrolidone to prepare a first positive electrode active material slurry; wherein the maximum shrinkage rate of the first positive electrode active material during the charge and discharge process is T1.

The aforementioned second positive electrode active material was selected, mixed with a conductive agent and a binder in a certain mass ratio, and dispersed in N-methylpyrrolidone to prepare a second positive electrode active material slurry; wherein the maximum shrinkage rate of the second positive electrode active material during the charge and discharge process is T2.

The first positive electrode active material slurry prepared above was coated on the surfaces of both sides of an aluminum foil. At the same time, the second positive electrode active material slurry prepared above was coated on the surface of the above positive electrode already coated with the first positive electrode active material slurry to obtain a positive electrode plate. The mass proportions of the first positive electrode active material and the second positive electrode active material in the active material layer of the positive electrode plate were 50% respectively.

2) Preparation of negative electrode plate

A negative electrode active material of artificial graphite, hard carbon, a conductive agent of acetylene black, a binder of styrene butadiene rubber (SBR), and a thickener of sodium carboxymethyl cellulose (CMC) at a mass ratio of 90:5:2:2:1 were mixed evenly in deionized water, coated on a copper foil, oven dried, and cold pressed to obtain a negative electrode plate. The coating amount was 0.2 g/cm$^2$ and the compacted density was 1.7 g/cm$^3$.

3) Preparation of separator

A polyethylene film was used as a substrate, and a coating was applied on the substrate to obtain a separator.

4) Preparation of lithium ion battery

The positive electrode plate, the separator and the negative electrode plate were stacked in sequence, so that the separator was placed between the positive electrode and the negative electrode to play a role of isolation, and then they were wound to obtain a bare battery cell. The bare battery cell was placed in an outer package, injected with an electrolyte solution and encapsulated to obtain a battery. The electrolyte solution was a solution of 1 mol/L of LiPF$_6$ in ethylene carbonate (EC), diethyl carbonate (DEC) and dimethyl carbonate (DMC) in a volume ratio of 1:1:1.

The differences between Example 2-35 and Example 1 are shown in Table 1 and Table 2.

Example 36 differs from Example 1 in that: In Step 1) of Example 1, the second positive electrode active material slurry was first coated on the surfaces of both sides of the aluminum foil, and then the first positive electrode active material slurry was coated on the surface of the second positive electrode active material slurry. Other preparation parameters were the same as in Example 1.

Comparative Example 1

The only difference from Example 1 is Step 1) Preparation of positive electrode plate: in Comparative Example 1, the first positive electrode active material slurry and the second positive electrode active material slurry were mixed evenly and then coated on the surfaces of both sides of the aluminum foil; the mass proportions of the first positive electrode active material and the second positive electrode active material were also 50% respectively, and the active layer had a thickness of 50 μm.

Test method:

Dynamic performance test method: At 25°C, a hard-shell battery was first fully discharged at 0.3C and then tested. The test process was as follows: the hard-shell battery was charged at a constant current of 0.3 C to a voltage of 4.25 V, then charged at a constant voltage of 4.25 V until the current was 0.02C, allowed to stand for 10 min, and then discharged at a constant current of 0.3 C to a voltage of 2.5 V, which was one charge and discharge cycle. The voltage drop in the first 30 seconds of this discharge is divided by the discharge current and recorded as the impedance value of the first cycle. The hard-shell battery was subjected to 500 cycles of charge and discharge test according to the above method, and the ratio of the discharge voltage drop to the discharge current in the first 30 seconds of the 500th cycle of the hard-shell battery was recorded, that is, the impedance value of the 500th cycle. The ratio of the impedance difference between the 500th cycle and the first cycle to the impedance of the first cycle (impedance growth rate) can characterize the dynamic performance.

The performance of the lithium-ion batteries in each of the examples and comparative examples is tested, and the results are shown in Table 3.

Table 1

| | First positive electrode active material | T1 | $D_V50$ (1) | D90-D10 | H1 |
|---|---|---|---|---|---|
| Example 1 | $Li_{1.00}Ni_{0.54}Co_{0.14}Mn_{0.32}O_2$ | 1.00% | 9.5 | 12 | 25μm |
| Example 2 | $Li_{1.00}Ni_{0.59}Co_{0.14}Mn_{0.27}O_2$ | 3.00% | 9.5 | 12 | 25μm |
| Example 3 | $Li_{1.00}Ni_{0.82}Co_{0.12}Mn_{0.06}O_2$ | 5.00% | 9.5 | 12 | 25μm |
| Example 4 | $Li_{1.00}Ni_{0.89}Co_{0.07}Mn_{0.04}O_2$ | 6.50% | 9.5 | 12 | 25μm |
| Example 5 | $Li_{1.00}Ni_{0.91}Co_{0.05}Mn_{0.04}O_2$ | 7.20% | 9.5 | 12 | 25μm |
| Example 6 | $Li_{1.00}Ni_{0.91}Co_{0.05}Mn_{0.04}O_2$ | 7.20% | 9.5 | 12 | 25μm |
| Example 7 | $Li_{1.00}Ni_{0.89}Co_{0.07}Mn_{0.04}O_2$ | 6.50% | 8 | 12 | 25μm |
| Example 8 | $Li_{1.00}Ni_{0.89}Co_{0.07}Mn_{0.04}O_2$ | 6.50% | 9.5 | 12 | 25μm |
| Example 9 | $Li_{1.00}Ni_{0.89}Co_{0.07}Mn_{0.04}O_2$ | 6.50% | 8 | 12 | 25μm |
| Example 10 | $Li_{1.00}Ni_{0.89}Co_{0.07}Mn_{0.04}O_2$ | 6.50% | 9.5 | 12 | 25μm |
| Example 11 | $Li_{1.00}Ni_{0.89}Co_{0.07}Mn_{0.04}O_2$ | 6.50% | 9.5 | 12 | 25μm |
| Example 12 | $Li_{1.00}Ni_{0.89}Co_{0.07}Mn_{0.04}O_2$ | 6.50% | 9.5 | 12 | 25μm |
| Example 13 | $Li_{1.00}Ni_{0.89}Co_{0.07}Mn_{0.04}O_2$ | 6.50% | 15 | 12 | 25μm |
| Example 14 | $Li_{1.00}Ni_{0.89}Co_{0.07}Mn_{0.04}O_2$ | 6.50% | 20 | 12 | 25μm |
| Example 15 | $Li_{1.00}Ni_{0.89}Co_{0.07}Mn_{0.04}O_2$ | 6.50% | 5 | 12 | 25μm |
| Example 16 | $Li_{1.001}Ni_{0.91}Co_{0.05}Mn_{0.04}O_2$ | 7.20% | 9.5 | 12 | 15μm |
| Example 17 | $Li_{1.001}Ni_{0.91}Co_{0.05}Mn_{0.04}O_2$ | 7.20% | 9.5 | 12 | 20μm |
| Example 18 | $Li_{1.001}Ni_{0.91}Co_{0.05}Mn_{0.04}O_2$ | 7.20% | 9.5 | 12 | 30μm |
| Example 19 | $Li_{1.001}Ni_{0.91}Co_{0.05}Mn_{0.04}O_2$ | 7.20% | 9.5 | 12 | 40μm |
| Example 20 | $Li_{1.001}Ni_{0.91}Co_{0.05}Mn_{0.04}O_2$ | 7.20% | 9.5 | 12 | 45μm |
| Example 21 | $Li_{1.00}Ni_{0.89}Co_{0.07}Mn_{0.04}O_2$ | 6.50% | 9.5 | 12 | 15μm |
| Example 22 | $Li_{1.00}Ni_{0.89}Co_{0.07}Mn_{0.04}O_2$ | 6.50% | 9.5 | 12 | 20μm |
| Example 23 | $Li_{1.00}Ni_{0.89}Co_{0.07}Mn_{0.04}O_2$ | 6.50% | 9.5 | 12 | 30μm |
| Example 24 | $Li_{1.00}Ni_{0.89}Co_{0.07}Mn_{0.04}O_2$ | 6.50% | 9.5 | 12 | 40μm |
| Example 25 | $Li_{1.00}Ni_{0.89}Co_{0.07}Mn_{0.04}O_2$ | 6.50% | 9.5 | 12 | 45μm |
| Example 26 | $Li_{1.00}Ni_{0.89}Co_{0.07}Mn_{0.04}O_2$ | 6.50% | 9.5 | 25 | 25μm |
| Example 27 | $Li_{1.00}Ni_{0.89}Co_{0.07}Mn_{0.04}O_2$ | 6.50% | 9.5 | 20 | 25μm |
| Example 28 | $Li_{1.00}Ni_{0.89}Co_{0.07}Mn_{0.04}O_2$ | 6.50% | 9.5 | 15 | 25μm |
| Example 29 | $Li_{1.00}Ni_{0.89}Co_{0.07}Mn_{0.04}O_2$ | 6.50% | 9.5 | 10 | 25μm |

(continued)

| | First positive electrode active material | T1 | $D_V50$ (1) | D90-D10 | H1 |
|---|---|---|---|---|---|
| Example 30 | $Li_{1.00}Ni_{0.89}Co_{0.07}Mn_{0.04}O_2$ | 6.50% | 8 | 8 | 25μm |
| Example 31 | $Li_{1.00}Ni_{0.89}Co_{0.07}Mn_{0.04}O_2$ | 6.50% | 8 | 5 | 25μm |
| Example 32 | $Li_{1.00}Ni_{0.89}Co_{0.07}Mn_{0.04}O_2$ | 6.50% | 8 | 3 | 25μm |
| Example 33 | $Li_{1.00}Ni_{0.54}Co_{0.14}Mn_{0.32}O_2$ (T1=1.00%) $+Li_{1.00}Ni_{0.55}Co_{0.12}Mn_{0.33}O_2$ (T1=1.02%) | 1.00% | 9.5 | 12 | 25μm |
| Example 34 | 90wt% $Li_{1.00}Ni_{0.54}Co_{0.14}Mn_{0.32}O_2$ (T1=1.00%) + 10wt%$Li_{1.00}Ni_{0.59}Co_{0.14}Mn_{0.27}O_2$ (T1=3.00%) | 1.00% | 9.5 | 12 | 25μm |
| Example 35 | 76wt%$Li_{1.00}Ni_{0.54}Co_{0.14}Mn_{0.32}O_2$ (T1=1%) + 24wt%$Li_{1.00}Ni_{0.59}Co_{0.14}Mn_{0.27}O_2$ (T1=1%) | 1.00% | 9.5 | 12 | 25μm |

Table 2

| | Second positive electrode active material | T2 | $D_V50$ (2) | H2 | T1-T2 | H1:H2 | $D_V50$ (1)/ $D_V50$ (2) |
|---|---|---|---|---|---|---|---|
| Example 1 | $Li_{1.00}Mn_{0.22}Fe_{0.78}PO_4$ | 0.30% | 0.5 | 25μm | 0.7 | 1 | 19 |
| Example 2 | $Li_{1.00}Mn_{0.36}Fe_{0.64}PO_4$ | 2.50% | 0.5 | 25μm | 0.5 | 1 | 19 |
| Example 3 | $Li_{1.00}1Mn_{0.999}Fe_{0.001}P_{0.999}Si_{0.001}O_4$ | 3.20% | 0.5 | 25μm | 1.8 | 1 | 19 |
| Example 4 | $Li_{1.00}Mn_{0.77}Fe_{0.20}Ti_{0.03}PO_4$ | 4.50% | 0.5 | 25μm | 2 | 1 | 19 |
| Example 5 | $Li_{1.00}Mn_{0.75}Fe_{0.16}Ti_{0.09}PO_4$ | 5.50% | 0.5 | 25μm | 1.7 | 1 | 19 |
| Example 6 | $Li_{1.00}Mn_{0.22}Fe_{0.78}PO_4$ | 0.30% | 0.5 | 25μm | 6.9 | 1 | 19 |
| Example 7 | $Li_{1.00}Mn_{0.77}Fe_{0.20}Ti_{0.03}PO_4$ | 4.50% | 0.15 | 25μm | 2 | 1 | 53 |
| Example 8 | $Li_{1.00}Mn_{0.77}Fe_{0.20}Ti_{0.03}PO_4$ | 4.50% | 1 | 25μm | 2 | 1 | 9 |
| Example 9 | $Li_{1.00}Mn_{0.77}Fe_{0.20}Ti_{0.03}PO_4$ | 4.50% | 1.6 | 25μm | 2 | 1 | 5 |
| Example 10 | $Li_{1.00}Mn_{0.77}Fe_{0.20}Ti_{0.03}PO_4$ | 4.50% | 0.3 | 25μm | 2 | 1 | 32 |
| Example 11 | $Li_{1.00}Mn_{0.77}Fe_{0.20}Ti_{0.03}PO_4$ | 4.50% | 0.2 | 25μm | 2 | 1 | 47 |
| Example 12 | $Li_{1.00}Mn_{0.77}Fe_{0.20}Ti_{0.03}PO_4$ | 4.50% | 0.4 | 25μm | 2 | 1 | 25 |
| Example 13 | $Li_{1.00}Mn_{0.77}Fe_{0.20}Ti_{0.03}PO_4$ | 4.50% | 5 | 25μm | 2 | 1 | 3 |
| Example 14 | $Li_{1.00}Ni_{0.81}Co_{0.10}Mn_{0.09}O_2$ | 4.50% | 6 | 25μm | 2 | 1 | 3.3 |
| Example 15 | $Li_{1.00}Mn_{0.77}Fe_{0.20}Ti_{0.03}PO_4$ | 4.50% | 0.5 | 25μm | 2 | 1 | 9 |
| Example 16 | $Li_{1.0}0Mn_{0.22}Fe_{0.78}PO_4$ | 0.30% | 0.5 | 35μm | 6.9 | 3:7 | 19 |
| Example 17 | $Li_{1.00}Mn_{0.22}Fe_{0.78}PO_4$ | 0.30% | 0.5 | 30μm | 6.9 | 4:6 | 19 |
| Example 18 | $Li_{1.00}Mn_{0.22}Fe_{0.78}PO_4$ | 0.30% | 0.5 | 20μm | 6.9 | 6:4 | 19 |
| Example 19 | $Li_{1.00}Mn_{0.22}Fe_{0.78}PO_4$ | 0.30% | 0.5 | 10μm | 6.9 | 4:1 | 19 |
| Example 20 | $Li_{1.00}Mn_{0.22}Fe_{0.78}PO_4$ | 0.30% | 0.5 | 5μm | 6.9 | 9:1 | 19 |
| Example 21 | $Li_{1.00}Mn_{0.77}Fe_{0.20}Ti_{0.03}PO_4$ | 4.50% | 1 | 35μm | 2 | 1 | 9 |
| Example 22 | $Li_{1.00}Mn_{0.77}Fe_{0.20}Ti_{0.03}PO_4$ | 4.50% | 1 | 30μm | 2 | 1 | 9 |
| Example 23 | $Li_{1.00}Mn_{0.77}Fe_{0.20}Ti_{0.03}PO_4$ | 4.50% | 1 | 20μm | 2 | 1 | 9 |
| Example 24 | $Li_{1.00}Mn_{0.77}Fe_{0.20}Ti_{0.03}PO_4$ | 4.50% | 1 | 10μm | 2 | 1 | 9 |
| Example 25 | $Li_{1.00}Mn_{0.77}Fe_{0.20}Ti_{0.03}PO_4$ | 4.50% | 1 | 5μm | 2 | 1 | 9 |
| Example 26 | $Li_{1.00}Mn_{0.77}Fe_{0.20}Ti_{0.03}PO_4$ | 4.50% | 0.2 | 25μm | 2 | 1 | 47.5 |
| Example 27 | $Li_{1.00}Mn_{0.77}Fe_{0.20}Ti_{0.03}PO_4$ | 4.50% | 0.2 | 25μm | 2 | 1 | 47.5 |

(continued)

| | Second positive electrode active material | T2 | $D_V50$ (2) | H2 | T1-T2 | H1:H 2 | $D_V50$ (1)/ $D_V50$ (2) |
|---|---|---|---|---|---|---|---|
| Example 28 | $Li_{1.00}Mn_{0.77}Fe_{0.20}Ti_{0.03}PO_4$ | 4.50% | 0.2 | 25μm | 2 | 1 | 47.5 |
| Example 29 | $Li_{1.00}Mn_{0.77}Fe_{0.20}Ti_{0.03}PO_4$ | 4.50% | 0.2 | 25μm | 2 | 1 | 47.5 |
| Example 30 | $Li_{1.00}Mn_{0.77}Fe_{0.20}Ti_{0.03}PO_4$ | 4.50% | 0.2 | 25μm | 2 | 1 | 40 |
| Example 31 | $Li_{1.00}Mn_{0.77}Fe_{0.20}Ti_{0.03}PO_4$ | 4.50% | 0.2 | 25μm | 2 | 1 | 40 |
| Example 32 | $Li_{1.00}Mn_{0.77}Fe_{0.20}Ti_{0.03}PO_4$ | 4.50% | 0.2 | 25μm | 2 | 1 | 40 |
| Example 33 | $Li_{1.00}Mn_{0.22}Fe_{0.78}PO_4$ | 0.30% | 0.5 | 25 μm | 0.7 | 1 | 19 |
| Example 34 | $Li_{1.00}Mn_{0.22}Fe_{0.78}PO_4$ | 0.30% | 0.5 | 25μm | 0.7 | 1 | 19 |
| Example 35 | $Li_{1.00}Mn_{0.22}Fe_{0.78}PO_4$ | 0.30% | 0.5 | 25μm | 0.7 | 1 | 19 |

Table 3 Battery performance

| | Dynamic performance |
|---|---|
| Example 1 | 35.2% |
| Example 2 | 9.5% |
| Example 3 | 3.4% |
| Example 4 | 17.5% |
| Example 5 | 46.4% |
| Example 6 | 57.2% |
| Example 7 | 69.5% |
| Example 8 | 27.5% |
| Example 9 | 29.6% |
| Example 10 | 38.6% |
| Example 11 | 47.9% |
| Example 12 | 31.0% |
| Example 13 | 63.5% |
| Example 14 | 74.2% |
| Example 15 | 33.4% |
| Example 16 | 78.6% |
| Example 17 | 62.1% |
| Example 18 | 59.1% |
| Example 19 | 65.8% |
| Example 20 | 72.3% |
| Example 21 | 46.7% |
| Example 22 | 33.5% |
| Example 23 | 31.0% |
| Example 24 | 37.9% |
| Example 25 | 51.2% |
| Example 26 | 68.4% |
| Example 27 | 57.5% |

(continued)

|  | Dynamic performance |
|---|---|
| Example 28 | 51.3% |
| Example 29 | 48.3% |
| Example 30 | 56.2% |
| Example 31 | 62.5% |
| Example 32 | 74.8% |
| Example 32 | 36.1% |
| Example 34 | 60.4% |
| Example 35 | 45.3% |
| Example 36 | 41.6% |
| Comparative Example 1 | 87.5% |

As can be seen from the above test results in Table 3:

In the examples of the present application, the dynamic performance (the ratio of the impedance difference between the 500th cycle and the first cycle to the impedance of the first cycle) was 3.4%-78.6%, while the dynamic performance of Comparative Example 1 (the ratio of the impedance difference between the 500th cycle and the first cycle to the impedance of the first cycle) reached 87.5%; the higher the ratio, the worse the dynamic performance. It can be seen that the solution of the present application effectively improves the dynamic performance of the battery.

Further, from the comparison of Examples 5 and 6, Examples 16-20, and Examples 1-4, it can be seen that when the value range of T1 is not 1%-7%, the dynamic performance of the battery is moderately improved; when the value range of T1 is 1%-7%, the dynamic performance of the battery is better improved; and when the value range of T1 is 3%-6.5%, the dynamic performance of the battery is excellently improved.

Further, from the comparison between Example 2 and other examples, it can be seen that when the value range of T2 is 0.5%-3%, the dynamic performance of the battery is excellently improved.

Further, it can be seen from Examples 7-14 that when the DV50(1)/DV50(2) of the first positive electrode active material and the second positive electrode active material is greater than 50, the dynamic performance of the battery is moderately improved; when the DV50(1)/DV50(2) of the first positive electrode active material and the second positive electrode active material is less than 5, the dynamic performance of the battery is moderately improved; when the DV50(1)/DV50(2) of the first positive electrode active material and the second positive electrode active material is between 5 and 50, the dynamic performance of the battery is better improved; when the DV50(1)/DV50(2) of the first positive electrode active material and the second positive electrode active material is between 5 and 35, the dynamic performance of the battery is excellently improved.

Further, it can be seen from Examples 26-32 that when the particle size distribution of the first positive electrode active material satisfies: DV90-DV10 > 20 $\mu$m, the dynamic performance of the battery is moderately improved; when the particle size distribution of the first positive electrode active material satisfies 9 $\mu$m$\leq$DV90-DV10$\leq$20 $\mu$m, the dynamic performance of the battery is excellently improved.

Furthermore, the solution of the present application is widely used: the positive electrode material includes layered materials, spinel structure materials and olivine structure materials, and the shrinkage rate of the layered structure is generally greater than that of the spinel and olivine structures. At the same time, the shrinkage rate of the layered structure is also affected by Ni element content. When the design capacity is the same, the shrinkage rate of a ternary layered material with a high Ni content is relatively large, and the shrinkage rate of a ternary layered material with a low Ni content is relatively small. The shrinkage rate of the olivine structure materials is relatively consistent, and is generally smaller than that of ternary layered materials.

According to the solution of the examples of the present application, the inventors in the art tested the shrinkage rate of the purchased materials. If the shrinkage rate of the materials meets the conditions described in the present application, a layered structure design (rather than mixing in the same layer) can be preferably adopted to improve the dynamic performance.

The described embodiments are a part of the embodiments of the present application rather than not all of the embodiments. The detailed description of the embodiments of the present application is not intended to limit the scope of the present application for which protection is claimed, but merely to indicate selected embodiments of the present application. Based on the embodiments in the present application, all other embodiments obtained by those of ordinary skill in the art without creative effort fall within the protection scope of the present application.

**Claims**

1. A positive electrode plate, wherein the positive electrode plate comprises at least two positive electrode active material layers;

   two adjacent positive electrode active material layers respectively comprise a first positive electrode active material and a second positive electrode active material; the maximum shrinkage rate of the first positive electrode active material is T1, and the maximum shrinkage rate of the second positive electrode active material is T2; T1 and T2 satisfy the following relationship:

$$T1-T2 \geq 0.3\%;$$

   and
   the maximum shrinkage rate refers to the maximum change in the shrinkage or expansion of the unit cell volume of the positive electrode active material during the charge and discharge process.

2. The positive electrode plate according to claim 1, wherein
   the value range of T1 is 1%-7%; optionally, the value range of T1 is 3%-6.5%.

3. The positive electrode plate according to claim 1, wherein
   the value range of T2 is 0.3%-5.5%; optionally, the value range of T2 is 0.5%-3%.

4. The positive electrode plate according to claim 1, wherein
   the $D_V50$ of the first positive electrode active material is 5 $\mu$m-15 $\mu$m; and the $D_V50$ of the second positive electrode active material is 0.2 $\mu$m-5 $\mu$m.

5. The positive electrode plate according to any one of claims 1-4, wherein

   the $D_V50$ value of the first positive electrode active material is greater than or equal to 5 times the $D_V50$ value of the second positive electrode active material;
   optionally, the $D_V50$ value of the first positive electrode active material is greater than or equal to 5 times the $D_V50$ value of the second positive electrode active material, and less than or equal to 50 times the $D_V50$ value of the second positive electrode active material; and
   optionally, the $D_V50$ value of the first positive electrode active material is greater than or equal to 5 times the $D_V50$ value of the second positive electrode active material, and less than or equal to 35 times the $D_V50$ value of the second positive electrode active material.

6. The positive electrode plate according to claim 5, wherein

   the particle size distribution of the first positive electrode active material satisfies: $D_V90-D_V10 \leq 20$ $\mu$m;
   optionally, the particle size distribution of the first positive electrode active material satisfies: $9 \leq D_V90-D_V10 \leq 20$ $\mu$m; and
   optionally, the particle size distribution of the second positive electrode active material satisfies: $D_V90-D_V10 \leq 9$ $\mu$m.

7. The positive electrode plate according to claim 1, wherein

   any of the positive electrode active material layers comprises a plurality of active materials; and the difference in the maximum shrinkage rate of the plurality of active materials does not exceed 0.3%;
   T1 is the minimum value among a plurality of maximum shrinkage rates of the plurality of active materials in the first positive electrode active material; and
   T2 is the maximum value among a plurality of maximum shrinkage rates of the plurality of active materials in the second positive electrode active material.

8. The positive electrode plate according to claim 1, wherein

   any of the positive electrode active material layers comprises a plurality of active materials; and the difference in the maximum shrinkage rate of the plurality of active materials exceeds 0.3%;
in terms of mass percentage, the plurality of active materials include 85%-100% main active substances; 0-15% trace active substances; and
T1 and T2 are both the maximum shrinkage rates of the main active substances.

9. The positive electrode plate according to claim 1, wherein
T1-T2$\geq$6%, the thickness of the positive electrode active material layer where the first positive electrode active material is located is H1; the thickness of the positive electrode active material layer where the second positive electrode active material is located is H2; and H1:H2 is (7:3)-(1:9).

10. The positive electrode plate according to any one of claims 1-9, wherein

the positive electrode plate includes a positive electrode current collector;
the positive electrode active material layer where the first positive electrode active material is located is close to the current collector; and
the positive electrode active material layer where the second positive electrode active material is located is far away from the current collector.

11. The positive electrode plate according to any one of claims 1-9, wherein

a transition layer is formed between the positive electrode active material layer where the first positive electrode active material is located and the positive electrode active material layer where the second positive electrode active material is located;
optionally, the transition layer has a thickness of 0.2 $\mu$m-2 $\mu$m.

12. The positive electrode plate according to any one of claims 1-11, wherein
the second positive electrode active material includes at least one of a spinel structure positive electrode material and an olivine structure positive electrode material.

13. The positive electrode plate according to claim 12, wherein

the second positive electrode active material includes $LiMPO_4$, wherein M includes Mn and non-Mn elements;
optionally, the non-Mn elements include one or both of a first doping element and a second doping element, the first doping element is used for manganese-site doping, and the second doping element is used for phosphorus-site doping;
optionally, the first doping element includes one or more elements of Zn, Al, Na, K, Mg, Mo, W, Ti, V, Zr, Fe, Ni, Co, Ga, Sn, Sb, Nb and Ge;
optionally, the first doping element includes at least two of Fe, Ti, V, Ni, Co, and Mg;
optionally, the second doping element includes one or more elements of B, S, Si and N;
optionally, the second positive electrode active material includes $Li_{1+x}Mn_{1-y}A_yP_{1-z}R_zO_4$, wherein x is any value in the range of -0.100-0.100, y is any value in the range of 0.001-0.500, z is any value in the range of 0.001-0.100, A includes one or more elements of Zn, Al, Na, K, Mg, Mo, W, Ti, V, Zr, Fe, Ni, Co, Ga, Sn, Sb, Nb, and Ge, and R includes one or more elements of B, S, Si, and N;
optionally, the second positive electrode active material includes $Li_aA_eMn_{1-f}B_fP_{1-g}C_gO_{4-n}D_n$,
wherein A includes one or more elements of Zn, Al, Na, K, Mg, Nb, Mo and W;
B includes one or more elements of Ti, V, Zr, Fe, Ni, Mg, Co, Ga, Sn, Sb, Nb, and Ge;
C includes one or more elements of B, S, Si, and N;
D includes one or more elements of S, F, Cl, and Br;
a is selected from the range of 0.9 to 1.1, e is selected from the range of 0.001 to 0.1, f is selected from the range of 0.001 to 0.5, g is selected from the range of 0.001 to 0.1, n is selected from the range of 0.001 to 0.1, and the second positive active material is electrically neutral.

14. The positive electrode plate according to any one of claims 1-11, wherein
the first positive electrode active material includes a layered structure positive electrode material.

15. The positive electrode plate according to claim 14, wherein
the first positive electrode active material includes at least one of a lithium nickel cobalt manganese oxide ternary material, a lithium nickel cobalt aluminium oxide ternary material, and a lithium nickel cobalt manganese aluminum oxide ternary material, or includes at least one of doped or clad materials of the above ternary materials.

16. The positive electrode plate according to claim 1, wherein

the positive electrode plate includes a positive electrode current collector;
the at least two positive electrode active material layers are stacked in sequence on the surface of the positive electrode current collector, and the porosity of the at least two positive electrode active material layers decreases in sequence away from the positive electrode current collector.

17. The positive electrode plate according to claim 16, wherein
the positive electrode active material layer close to the positive electrode current collector has a porosity of >45%; optionally, the positive electrode active material layer in contact with the positive electrode current collector has a porosity of >60%.

18. The positive electrode plate according to claim 17, wherein
the far-away positive electrode active material layer has a porosity of >25%; optionally, the outermost positive electrode active material layer has a porosity of $\geq$50%.

19. A battery, comprising the positive electrode plate according to any one of claims 1-18.

20. An electrical apparatus, comprising the battery according to claim 19.

1000

**FIG. 1**

100

**FIG. 2**

# FIG. 3

**FIG. 4**

221

2211

2212　　　　2212

## FIG. 5

## INTERNATIONAL SEARCH REPORT

| International application No. |
|---|
| **PCT/CN2023/095338** |

**A. CLASSIFICATION OF SUBJECT MATTER**

H01M4/36(2006.01)i

According to International Patent Classification (IPC) or to both national classification and IPC

**B. FIELDS SEARCHED**

Minimum documentation searched (classification system followed by classification symbols)

IPC: H01M4/-.

Documentation searched other than minimum documentation to the extent that such documents are included in the fields searched

Electronic data base consulted during the international search (name of data base and, where practicable, search terms used)

CNABS, CNTXT, ENTXTC, VEN, CNKI, Web of Science: 双层, 两层, 两种, 层状, 多层, 活性材料, 活性体, 活性物质, 开裂, 裂开, 膨胀, 膨胀率, 收缩, 收缩率, 应力, 正极, 动力学, 锂电, 锂离子电池, difference, expansion, substract, positive electrode, expand, shrink, lithium cell, lithium battery, active, cleave, stress.

**C. DOCUMENTS CONSIDERED TO BE RELEVANT**

| Category* | Citation of document, with indication, where appropriate, of the relevant passages | Relevant to claim No. |
|---|---|---|
| Y | CN 115832183 A (NINGDE CONTEMPORARY AMPEREX TECHNOLOGY CO., LTD.) 21 March 2023 (2023-03-21) <br> description, paragraphs 56-155, and figures 1-8 | 1-6, 10, 12-15, 19-20 |
| Y | US 2015236375 A1 (PANASONIC INTELLECTUAL PROPERTY MANAGEMENT CO., LTD.) 20 August 2015 (2015-08-20) <br> description, paragraphs 40-135, and figures 1a-5b | 1-6, 10, 12-15, 19-20 |
| A | JP 2009176449 A (HITACHI VEHICLE ENERGY, LTD.) 06 August 2009 (2009-08-06) <br> entire document | 1-20 |
| A | WO 2022141508 A1 (DONGGUAN AMPEREX TECHNOLOGY LIMITED) 07 July 2022 (2022-07-07) <br> entire document | 1-20 |
| A | CN 114628634 A (SVOLT ENERGY TECHNOLOGY (WUXI) CO., LTD.) 14 June 2022 (2022-06-14) <br> entire document | 1-20 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 January 2024** | **30 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 625 533 A1**

**INTERNATIONAL SEARCH REPORT**

International application No.

**PCT/CN2023/095338**

**C.    DOCUMENTS CONSIDERED TO BE RELEVANT**

| Category* | Citation of document, with indication, where appropriate, of the relevant passages | Relevant to claim No. |
|---|---|---|
| A | CN 115939322 A (NINGDE CONTEMPORARY AMPEREX TECHNOLOGY CO., LTD.) 07 April 2023 (2023-04-07)<br>    entire document | 1-20 |
| A | CN 115483365 A (ZHUHAI COSMX BATTERY CO., LTD.) 16 December 2022 (2022-12-16)<br>    entire document | 1-20 |

Form PCT/ISA/210 (second sheet) (July 2022)

**INTERNATIONAL SEARCH REPORT**
Information on patent family members

International application No.

**PCT/CN2023/095338**

| Patent document cited in search report | | | Publication date (day/month/year) | Patent family member(s) | | | Publication date (day/month/year) |
|---|---|---|---|---|---|---|---|
| CN | 115832183 | A | 21 March 2023 | None | | | |
| US | 2015236375 | A1 | 20 August 2015 | US | 9799920 | B2 | 24 October 2017 |
| | | | | JP | 5807193 | B2 | 10 November 2015 |
| | | | | JPWO | 2015029290 | A1 | 02 March 2017 |
| | | | | WO | 2015029290 | A1 | 05 March 2015 |
| JP | 2009176449 | A | 06 August 2009 | EP | 2083464 | A1 | 29 July 2009 |
| | | | | EP | 2083464 | B1 | 16 May 2012 |
| | | | | KR | 20090080911 | A | 27 July 2009 |
| | | | | KR | 101275677 | B1 | 14 June 2013 |
| | | | | US | 2009186278 | A1 | 23 July 2009 |
| | | | | US | 8367243 | B2 | 05 February 2013 |
| | | | | JP | 5300274 | B2 | 25 September 2013 |
| | | | | CN | 101494301 | A | 29 July 2009 |
| | | | | CN | 101494301 | B | 15 June 2011 |
| WO | 2022141508 | A1 | 07 July 2022 | CN | 113498558 | A | 12 October 2021 |
| | | | | CN | 113498558 | B | 25 August 2023 |
| CN | 114628634 | A | 14 June 2022 | CN | 114628634 | B | 15 September 2023 |
| CN | 115939322 | A | 07 April 2023 | None | | | |
| CN | 115483365 | A | 16 December 2022 | None | | | |

Form PCT/ISA/210 (patent family annex) (July 2022)